Europäisches Patentamt

European Patent Office

Office européen des brevets

(19)

(11) **EP 1 519 433 A1**

(12) **EUROPEAN PATENT APPLICATION**

(43) Date of publication:
**30.03.2005 Bulletin 2005/13**

(51) Int Cl.$^7$: **H01M 4/96**, H01M 4/94,
H01M 4/86

(21) Application number: **04254513.7**

(22) Date of filing: **28.07.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **26.09.2003 KR 2003066941**

(71) Applicant: **Samsung SDI Co., Ltd.**
**Suwon-si, Gyeonggi-do (KR)**

(72) Inventors:
 • **Kim, Ji-rae**
   **Songpa-gu Seoul (KR)**
 • **Choi, Kyoung-hwan**
   **Gwonseon-gu, Suwon-si, Gyeonggi-do (KR)**

(74) Representative: **Greene, Simon Kenneth**
   **Elkington and Fife LLP,**
   **Prospect House,**
   **8 Pembroke Road**
   **Sevenoaks, Kent TN13 1XR (GB)**

(54) **Diffusion electrode for fuel cell**

(57)    A diffusion electrode for a fuel cell, having good polar liquid transporting property and gas transporting property, and an electrode and a fuel cell using the diffusion electrode are provided. The diffusion electrode includes: hydrophobic porous agglomerates containing electroconductive particles and a hydrophobic binder resin, which act as a gas transporting path without soaking in a polar liquid and form three dimensional netlike structures; and hydrophilic porous agglomerates containing electroconductive particles, which form three dimensional netlike structures filling empty space among the netlike structures formed by the hydrophobic porous agglomerates and act as a polar liquid transporting path.

**FIG. 1**

**Description**

The present invention relates to a fuel cell, and more particularly, to a diffusion electrode for a fuel cell.

Fuel cells are power generators that produce electrical energy through electrochemical reactions of fuels with oxygen. Since they are not based on the Carnot cycle used in thermal power generation, their theoretical power generation efficiency is very high. Fuel cells can be used as power sources for small electrical/electronic devices, including portable devices, as well as for industrial, domestic, and transportation applications.

Fuel cells can be classified into polymer electrolyte membrane fuel cells (PEMFCs), phosphoric acid fuel cells (PAFCs), molten carbonate fuel cells (MCFCs), solid oxide fuel cells (SOFCs), and other kinds depending on the electrolyte type. The working temperature of fuel cells and constituent materials therefor vary depending on the electrolyte type used in a cell.

According to the way of supplying fuel to the anode, fuel cells can be classified into an external reformer type, where fuel is supplied to the anode after being converted into hydrogen-rich gas by a fuel reformer, and a direct fuel supply type or internal reformer type, where fuel in gaseous or liquid state is directly supplied to the anode.

A representative example of direct fuel supply type cells is a direct methanol fuel cell (DMFC). In the DMFCs, an aqueous methanol solution is generally supplied to the anode. The DMFCs do not require an external reformer, use fuel that is convenient to handle, and have the highest potential available as potable energy sources over other kinds of fuel cells.

Electrochemical reactions occurring in a DMFC are as follows: fuel is oxidized at the anode, and oxygen is reduced into water through a reaction with hydrogen ions at the cathode.

Anode reaction:

$$CH_3OH + H_2O \rightarrow 6\,H^+ + 6\,e^- + CO_2$$

Cathode Reaction:

$$1.5\,O_2 + 6H^+ + 6e^- \rightarrow 3\,H_2O$$

Overall Reaction:

$$CH_3OH + 1.5\,O_2 \rightarrow 2\,H_2O + CO_2$$

As apparent from the above reaction schemes, methanol reacts with water at the anode to produce one carbon dioxide molecule, six hydrogen ions, and six electrons. The produced hydrogen ions migrate to the cathode through an electrolyte membrane with hydrogen ion conductivity, which is interposed between the anode and the cathode. The migrated hydrogen ions react with oxygen and electrons, which are supplied via an external circuit, at the cathode to produce water. Summarizing the overall reaction in the DMFC, water and carbon dioxide are produced through the reaction of methanol with oxygen. As a result, a substantial part of the energy equivalent to the heat of combustion of methanol is converted into electrical energy. In order to facilitate such reaction, the anode and the cathode include a catalyst.

Generally, the DMFC includes an electrolyte membrane transporting hydrogen ions, which is interposed between an anode catalyst layer and a cathode catalyst layer.

An anode diffusion layer, which is located outside of the anode catalyst layer, acts as a path for transporting the aqueous methanol solution to the anode catalyst layer, as a path for discharging carbon dioxide produced at the anode catalyst layer, and as a conductor for transporting electrons produced at the anode catalyst layer. A cathode diffusion layer, which is located outside of the cathode catalyst layer, acts as a path for transporting oxygen or air to the cathode catalyst layer, as a path for discharging water produced at the cathode catalyst layer, and as a conductor for transporting electrons to the cathode catalyst layer.

An electroconductive bipolar plate or end plate, on a side of which a flow field for supplying the aqueous methanol solution and discharging carbon dioxide is formed, is disposed outside of the anode diffusion layer. An electroconductive bipolar plate or end plate, on a side of which a flow field for supplying oxygen and air and discharging water is formed, is disposed outside of the cathode diffusion layer.

For example, in fuel cells using hydrogen gas or hydrogen containing gas as fuel, such as PEMFC and PAFC, both reactant and product in the anode are in gaseous state, and thus, the anode diffusion layer is not required to have complicated transporting property.

However, in the DMFCs using the aqueous methanol solution as fuel, the reactant and the product in the anode are liquid and gas, respectively, and thus, the anode diffusion layer is required to have good liquid and gas transporting property.

The cathode diffusion layer in the DMFCs is also required to have the same property as the anode diffusion layer. Generally, the DMFCs operate at a temperature below boiling point of water, for example, at about 80°C. Since the reactant and the product in the cathode are gas and liquid, respectively, the cathode diffusion layer has to possess good liquid and gas transporting property.

A conventional diffusion electrode for a fuel cell is generally manufactured by mixing carbon black with polytetrafluoroethylene (PTFE) and heat treating the mixture, as disclosed in U.S. Patent No. 4,551,220.

U.S. Patent No. 6,103,077 discloses a diffusion electrode having a two-layer structure. In the two-layer diffusion electrode, one layer is hydrophilic and the other layer is hydrophobic.

However, when the conventional diffusion layer is applied to the DMFC, fuel in liquid state can still flood a whole area of the anode diffusion layer. As a result, the path for discharging gaseous product produced in the anode catalyst layer is clogged. Accordingly, a lump of gaseous product is present in the anode catalyst layer, thereby poisoning a catalyst in the anode catalyst layer. Moreover, gaseous product resulted from a side reaction has higher reactivity to the catalyst than fuel, allowing catalyst utilization efficiency to be lowered. Also, the lump of gas prevents fuel from diffusing in the anode catalyst layer.

According to an aspect of the present invention, there is provided a diffusion electrode for a fuel cell, including: hydrophobic porous agglomerates containing electroconductive particles and a hydrophobic binder resin, which act as a gas transporting path without soaking in a polar liquid and form three dimensional netlike structure; and hydrophilic porous agglomerates containing electroconductive particles, which form three dimensional netlike structure filling spaces in the netlike structure formed by the hydrophobic porous agglomerates and act as a polar liquid transporting path.

The hydrophobic porous agglomerate and the hydrophilic porous agglomerate may be continuously arranged in a direction of the thickness of the diffusion electrode.

According to another aspect of the present invention, there is provided an electrode for a fuel cell, including: a catalyst layer; and the diffusion electrode for the fuel cell as described above.

According to another aspect of the present invention, there is provided a fuel cell including a cathode containing a catalyst layer and a diffusion layer, an anode containing a catalyst layer and a diffusion layer, and an electrolyte membrane interposed between the cathode and the anode, wherein at least one of the diffusion layer of the cathode and the diffusion layer of the anode is the diffusion electrode as described above.

The present invention thus provides a diffusion electrode for a fuel cell, having good polar liquid transporting property and gas transporting property.

The present invention also provides an electrode for a fuel cell, including a diffusion electrode having good polar liquid transporting property and gas transporting property.

The present invention also provides a fuel cell including a diffusion electrode having good polar liquid transporting property and gas transporting property.

The above and other features and advantages of the present invention will become more apparent by describing in detail exemplary embodiments thereof with reference to the attached drawings in which:

FIG. 1 is a cross-sectional view of a diffusion electrode for a fuel cell according to an embodiment of the present invention;

FIG. 2 illustrates a material transporting procedure in the diffusion electrode of the present invention;

FIG. 3 illustrates schematically an example of a method of manufacturing the diffusion electrode of the present invention;

FIG. 4 is an SEM photograph of a cross section of the diffusion electrode manufactured in an Example of the present invention; and

FIGS. 5 through 8 are polarization curves of fuel cells obtained in Examples and a Comparative Example of the present invention, respectively.

Hereinafter, a diffusion electrode for a fuel cell according to an embodiment of the present invention will be described in more detail.

The diffusion electrode for the fuel cell according to an embodiment of the present invention has different structure from a conventional diffusion electrode. For example, in a direct methanol fuel cell (DMFC), an aqueous methanol liquid as fuel supplied to an anode is in a liquid state and $CO_2$ resulted from an electrochemical reaction in an anode catalyst layer is in a gaseous state. The diffusion electrode for the fuel cell of the present invention is provided with such a microstructure that a hydrophilic path for uniformly diffusing the aqueous methanol solution and a hydrophobic path for rapidly discharging $CO_2$ are divided, thereby resolving problems regarding the conventional diffusion electrode.

In the diffusion electrode of the present invention, examples of the hydrophobic binder resin in the hydrophobic porous agglomerate include polytetrafluoroethylene (PTFE), perfluoro(alkoxyalkane) (PFA) copolymer, fluorinated ethylene-propylene (FEP) copolymer, and the like.

When the content of the hydrophobic binder resin in the hydrophobic porous agglomerate is too low, hydrophobic property of the hydrophobic porous agglomerate is excessively lowered, thus the hydrophobic porous agglomerate soaks in liquid fuel and can lose the function as the gaseous product discharging path. When the content of the hydrophobic binder resin in the hydrophobic porous agglomerate is too high, the content of the electroconductive particles in the hydrophobic porous agglomerate is greatly lowered. Accordingly, an electroconductivity of the diffusion electrode decreases and it is difficult to form a microporous path. In view of this, the content of the hydrophobic binder resin in the hydrophobic porous agglomerate may be in the range of about 20 to about 80 % by weight.

In the diffusion electrode of the present invention, examples of the electroconductive particle in the hydrophobic porous agglomerate include spherical or needle-shaped carbon powder, graphite powder, and the like.

When an average particle diameter of the electroconductive particle in the hydrophobic porous agglomerate is too small, it is difficult to form the porous path. When the average particle diameter of the electroconductive particle in the hydrophobic porous agglomerate is too large, a resulting pore is also large, thereby causing loss of the catalyst layer formed on the diffusion electrode. In view of this, the average particle diameter of the electroconductive particle in the hydrophobic porous agglomerate may be in the range of about 30 to about 300 nm.

In the diffusion electrode of the present invention, examples of the electroconductive particle in the hydrophilic porous agglomerate include spherical or needle-shaped carbon powder, graphite powder, and the like.

When the average particle diameter of the electroconductive particle in the hydrophilic porous agglomerate is too small, it is difficult to form the porous path. When the average particle diameter of the electroconductive particle in the hydrophilic porous agglomerate is too large, a resulting pore is also large, thereby causing loss of the catalyst layer formed on the diffusion electrode. In view of this, the average particle diameter of the electroconductive particle in the hydrophilic porous agglomerate may be in the range of about 30 to about 300 nm.

As described above, the diffusion electrode of the present invention includes the hydrophobic porous agglomerate and the hydrophilic porous agglomerate. Both the hydrophobic porous agglomerate and the hydrophilic porous agglomerate, respectively, form irregular netlike networks and these networks entangle complementarily. Although both agglomerates form netlike networks, the agglomerates form paths for transporting the liquid reactant and gaseous product, respectively, in a direction of the thickness of the diffusion electrode.

In the diffusion electrode of the present invention, a weight ratio of the hydrophobic porous agglomerate to the hydrophilic porous agglomerate may be appropriately determined to have both liquid reactant transporting ability and gaseous product transporting ability.

In view of this, the weight ratio of the hydrophobic porous agglomerate to the hydrophilic porous agglomerate in the diffusion electrode of the present invention may typically be in the range of about 10:90 to about 90:10.

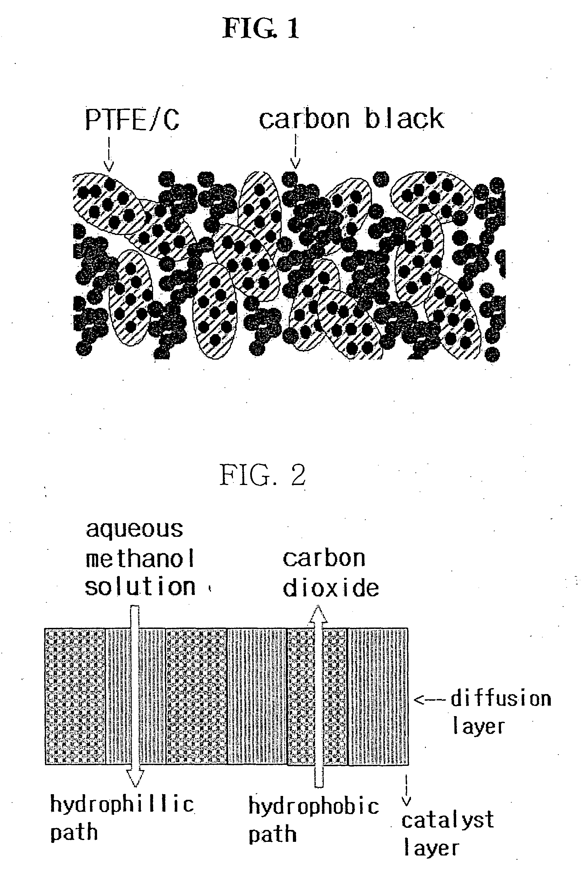

FIG. 1 is a cross-sectional view of the diffusion electrode for a fuel cell of the present invention. Referring to FIG. 1, the hydrophilic path composed of mainly carbon is arranged in a direction of the thickness of the diffusion electrode. The hydrophobic path adjacent to the hydrophilic path, composed of mainly carbon and PTFE is arranged in a direction of the thickness of the diffusion electrode, too. Such structures are arranged throughout the diffusion electrode. The hydrophilic and hydrophobic paths are porous.

For example, when the diffusion electrode is applied to the DMFC, the aqueous methanol solution used as fuel is supplied to the anode catalyst layer by rapidly diffusing via the hydrophilic path of the anode diffusion layer. The aqueous methanol solution mainly diffuses via the hydrophilic path and the pores of the adjacent hydrophobic path remains open. The aqueous methanol solution reaches the anode catalyst layer and causes the electrochemical reaction by aid of a catalyst. Hydrogen ions produced by the electrochemical reaction pass through the catalyst layer and is transported to the cathode via a cluster of electrolyte.

In the anode catalyst layer, CO may be produced by a side reaction, in addition to $CO_2$. CO seriously poisons the catalyst. However, when the diffusion electrode of the present invention is applied to the fuel cell, $CO_2$ and CO are rapidly discharged outside of the fuel cell through the hydrophobic path of the anode diffusion layer in contact with the anode catalyst layer, thereby keeping the catalyst of the anode catalyst layer active. While the fuel cell operates, the aqueous methanol solution does not permeate the hydrophobic path, so that the open pores continuously connected to one another are stably ensured. Resulting gas can be easily discharged outside of the fuel cell through the ensured pores of the hydrophobic path. As described above, since migrations of the aqueous methanol solution and the resulting gas, respectively, are rapidly performed through different paths from each other, the electrochemical reaction in the catalyst layer can rapidly occur without the influence of the reactant and the product

Since electrons migrate through continuous hydrophilic carbon path in the diffusion electrode of the present invention, electrons produced in the catalyst layer can be easily transported to an external circuit.

FIG. 2 illustrates a material transporting procedure in the diffusion electrode of the present invention. As described above, fuel is supplied via the hydrophobic path composed of PTFE/C and gaseous product is discharged via the hydrophilic path composed of carbon.

The diffusion electrode for a fuel cell of the present invention may be manufactured the following method. Electroconductive particles, a hydrophobic binder resin and a solvent are mixed and dried. The dried product is heat treated to prepare composite powder of the electroconductive particles and the hydrophobic binder resin. Then, the composite powder, the electroconductive particles and a solvent are mixed to prepare a diffusion electrode slurry. Then, the slurry is coated on a substrate, and then, the coated slurry is dried and heat treated.

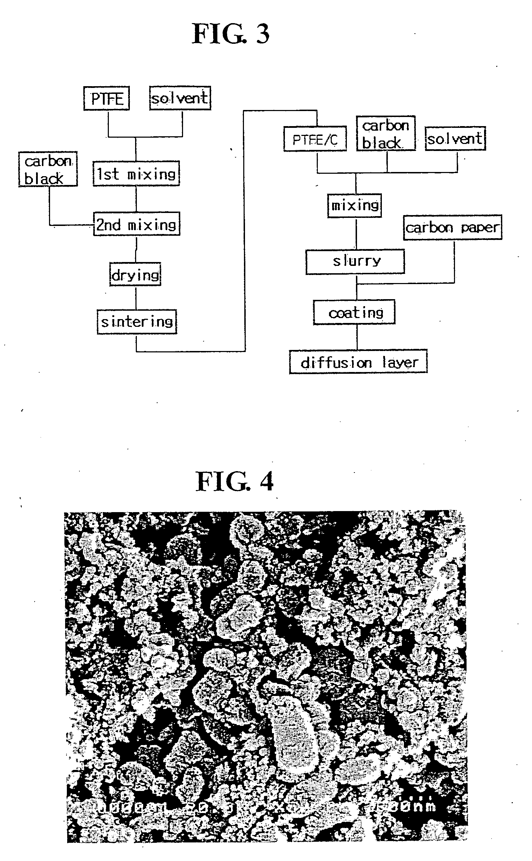

FIG. 3 is a schematic view of an example of a method of manufacturing the diffusion electrode of the present invention. Initially, a suspension of the hydrophobic binder resin, such as PTFE, and a solvent are first mixed. Examples of the solvent include water, an alcoholic solvent, and a mixture thereof. Specific examples of the alcoholic solvent include isopropylalcohol, etc. The first mixing may be performed using a mixer with low rotational frequency. Then, second mixing is performed by adding electroconductive particles, such as carbon black, to the mixture and by stirring the mixture. The stirrer used in the second mixing may be a stirrer having higher rotational frequency than the stirrer used in the first mixing. PTFE and carbon black are uniformly mixed by thoroughly stirring, and then, the mixture is dried in an oven at about 60 to about 100°C. The dried substance is sintered at about 330 to about 370°C. In this manner, composite 5 powder of the electroconductive particles and the hydrophobic binder resin, such as PTFE/C composite powder can be prepared.

Then, thus obtained PTFE/C composite powder and carbon powder are mixed to prepare the diffusion electrode slurry. In order to prepare the diffusion electrode slurry, PTFE/C composite powder, carbon powder and a solvent are first uniformly mixed using a mixer. At this time, an alcoholic solvent is used as the solvent. Specific examples of the alcoholic solvent include isopropylalcohol, etc.

The obtained diffusion electrode slurry is coated on a substrate, such as a carbon paper, and then, the coating is dried and applied to heat treatment (sintering) to complete the diffusion electrode. Examples of a coating method include painting, spraying, etc. The diffusion electrode slurry coated on the substrate is dried at a temperature of about 60 to about 100°C. The solvent in the coated slurry is removed through this drying process, and then, the dried diffusion electrode is sintered. The sintering process may be performed at a temperature of about 330 to about 370°C.

In the method of the present invention, it is noted that the heat treated composite powder including the hydrophobic polymer and the electroconductive particles is first prepared and the slurry including the heat treated composite powder and the electroconductive particles is used to form the diffusion electrode for the fuel cell in which the hydrophobic path and the hydrophilic path are independently randomly arranged.

The present invention also provides an electrode for a fuel cell, including a catalyst layer and the above diffusion electrode.

The electrode of the present invention can be applied to, for example, PAFC, PEMFC, DMFC, in particular DMFC. The electrode of the present invention can be applied to the anode and the cathode in the fuel cells.

The anode and the cathode in the fuel cell may be manufactured using a conventional method known in the various literatures, and thus, the detailed description thereof will be omitted here. However, the diffusion electrode is formed according to the above-described method of the present invention.

The present invention also provides a fuel cell including a cathode containing a catalyst layer and a diffusion layer, an anode containing a catalyst layer and a diffusion layer, and an electrolyte membrane interposed between the cathode and the anode, wherein at least one of the diffusion layer of the cathode and the diffusion layer of the anode is the diffusion electrode according to the present invention.

The fuel cell of the present invention can be applied to, for example, PAFC, PEMFC, DMFC, in particular DMFC. The fuel cell may be manufactured using a conventional method known in various literatures, and thus, the detailed description thereon will be omitted here. However, the diffusion electrode is formed according to the above-described method of the present invention.

The present invention will be described in greater detail with reference to the following examples. The following examples are for illustrative purposes and are not intended to limit the scope of the invention.

Example 1

Manufacturing of a diffusion electrode

1.67 g of PTFE suspension (60 % by weight of aqueous dispersion) was added to a mixure of 8.35 g of isopropylalcohol (IPA) and 8.35 g of ultrapure water and the obtained mixture was uniformly mixed using a stirrer to prepare a diluted PTFE suspension. 1 g of carbon black (Vulcan XC-72R) was mixed with 15 g of IPA and the obtained mixture was stirred using an ultrasonic homogenizer for 20 minutes to prepare a carbon black dispersion.

The diluted PTFE dispersion and the carbon black dispersion were mixed and stirred for 10 minutes. After removing the solvent from the mixture under vacuum, the remaining mixture was dried in an oven at 80°C for 2 hours to completely remove the solvent. The mixture of PTFE and carbon black was sintered in a furnace under an inactive atmosphere for 20 minutes to obtain PTFE/C composite powder.

1 g of the PTFE/C composite powder was dispersed in 20 g of IPA and 2 g of carbon black (Vulcan XC-72R) was dispersed in 15 g of IPA. Then, these dispersions were mixed using an ultrasonic homogenizer to obtain a diffusion electrode slurry.

The diffusion electrode slurry was coated on a carbon paper by spraying. The coated carbon paper was dried in an oven at 80°C for 2 hours to obtain a diffusion electrode. An amount of the carbon black (Vulcan XC-72R) in the obtained diffusion electrode was 0.3 mg/cm$^2$.

FIG. 4 is an SEM photograph of the cross section of the diffusion electrode prepared in the present Example. In FIG. 4, larger particles shown in a central portion are the PTFE/C composite powders in which PTFE and carbon black are combined. Smaller particles in a peripheral portion are carbon black. As is apparent from FIG. 4, a structure in which the hydrophobic path and the hydrophilic path separately form networks, respectively, is formed.

Manufacturing of an anode

0.24 g of Pt-Ru powder and 0.2 g of distilled water were mixed in a stirrer such that the Pt-Ru powder was soaked in distilled water. 3.6 g of IPA was added to the mixture and stirred with an ultrasonic homogenizer for about 20 minutes, thereby obtaining an anode catalyst layer forming slurry. The anode catalyst layer forming slurry was coated on the previously prepared diffusion electrode by spraying and dried in an oven at 80°C for about 2 hours to remove the remaining solvent, thereby obtaining an anode. The loading amount of Pt-Ru catalyst of the anode was 4 mg/cm$^2$.

Manufacturing of a cathode

0.24 g of Pt powder and 0.3 g of distilled water were mixed such that Pt powder was soaked in distilled water. The subsequent process was performed in the same manner as in the process of manufacturing the anode to obtain the cathode. The loading amount of Pt catalyst of the cathode was 4 mg/cm$^2$.

Manufacturing of a fuel cell

Nafion 115 was used as an electrolyte membrane. The above anode, the above cathode, and Nafion 115 membrane were hot pressed to obtain a membrane & electrode assembly (MEA). The hot pressing was performed at 125°C under a pressure of 5 ton for 3 minutes.

Example 2

In Example 1, a weight ratio of the PTFE/C composite powder and the carbon black was 1:2. Thus, the hydrophilic path composed of carbon black was relatively broadly spread, enabling fuel to be more smoothly supplied.

However, in the present Example, a weight ratio of the PTFE/C composite powder and the carbon black was 1:1, i.e., an amount of carbon black was reduced. Accordingly, the hydrophobic path composed of PTFE/C composite powder was more broadly spread than in Example 1, thereby allowing gaseous product to be smoothly discharged. Other processes were performed in the same manner as in Example 1.

Comparative Example

1 g of carbon black (Vulcan XC-72R) was mixed with 30 g of IPA and stirred for 20 minutes using an ultrasonic homogenizer. Then, 1.67 g of an PTFE suspension (60 % by weight of aqueous dispersion) was mixed with the stirred carbon black dispersion and stirred for 10 minutes to prepare a diffusion electrode slurry. The diffusion electrode slurry was coated on a carbon paper by spraying. The conditions of spraying were the same as in Example 1. The carbon paper used in Example 1 was also used in this Comparative Example. The coated diffusion electrode was dried in an oven at 80°C for 2 hours to completely remove the solvent, and then, sintered in a furnace at 350°C for about 20 minutes. As a result, the diffusion electrode of the anode to be used for comparison was obtained. Other processes including coating a catalyst layer were performed in the same manner as in Example 1 to obtain a diffusion electrode, an electrode, and a fuel cell.

Evaluation result

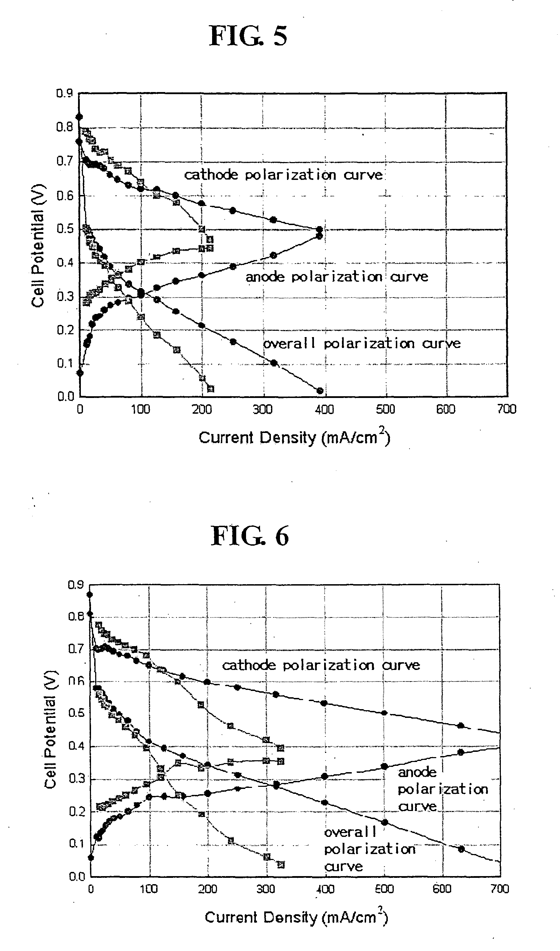

In the fuel cells obtained in Example 1 and Comparative Example, a 2M aqueous methanol solution was used as fuel supplied to the anode at a flow rate of about 3 times with respect to stoichiometric amount of fuel required in a fuel cell. Air in atmosphere was used as an oxidant supplied to the cathode at a flow rate of about 3 times with respect to stoichiometric amount. An operating temperature was in the range of 30 to 50°C. Polarization curves of the fuel cells were obtained and the obtained results were shown in FIG. 5.

FIG. 5 is a graph of polarization curves of the fuel cells obtained in Example 1 and Comparative Example, respectively. The square/solid line represents the performance of the fuel cell obtained in Comparative Example. The circle/solid line represents the performance of the fuel cell obtained in Example 1. The operating conditions were 30°C and atmospheric pressure. Referring to the polarization curve of the anode, it was apparent that the fuel cell of Example 1 had better performance than that of Comparative Example. Fuel supplied via the hydrophilic path underwent electrochemical reaction with the anode catalyst. At this time, $CO_2$ produced as a side product was rapidly discharged via the hydrophobic path, and thus, a good utilization efficiency of the anode catalyst was retained. Accordingly, although the amount of current increased, the voltage scarcely decreased. Also, the amount of fuel supplied was limited due to the hydrophobic path and most of fuel supplied to the catalyst layer was used in the electrochemical reaction, thereby suppressing cross-over of methanol through the electrolyte membrane. Accordingly, the poisoning of the cathode catalyst by methanol was prevented and mixing potential formed by the reaction of methanol in the cathode decreased, resulting in lower gradient of the cathode polarization curve. As a result, gradient of overall polarization curve also lowered, leading to improved performance.

Referring to the overall polarization curve of a unit cell in FIG. 5, the difference of current density at a cell potential of 0.4 V in fuel cells of Example 1 and Comparative Example was small. However, at a cell potential of 0.3 V, the fuel cell of Example 1 had increased current density of about 50 % higher than current density of the fuel cell of Comparative Example. Also, the gradient of the overall polarization curve of the fuel cell of Example 1 at a cell potential of 0.4 V or lower was much lower than that of Comparative Example. It is indicated that in the fuel cell of Example 1, supplying of fuel and discharging of product are rapidly occurred, and thus, overvoltage due to material transporting is not high. That is, supplying of reactant and discharging of product via the diffusion electrode are smoothly performed.

In the fuel cells obtained in Example 1 and Comparative Example, a 2M aqueous methanol solution was used as fuel supplied to the anode at a flow rate of 3 times with respect to stoichiometric amount. Air was used as an oxidant supplied to the cathode at a flow rate of 3 times with respect to stoichiometric amount. An operating temperature was 50°C. Polarization curves of the fuel cells were obtained and the obtained results were shown in FIG. 6.

Referring to FIG. 6, the effect of the diffusion electrode of Example 1 was enhanced with raising the temperature and the performance of the fuel cell of Example 1 was improved at least 2 times based on that of the fuel cell of Comparative Example. Such effect of the temperature is connected with the performance of the fuel cell. At a cell potential of 0.3 V, the fuel cell of Example 1 had the current density of about 120 mA/cm$^2$ in FIG. 5. Meanwhile, in FIG. 6, the current density of the fuel cell of Example 1 was about 280 mA/cm$^2$ at a cell potential of 0.3 V. Consequently, the current density increased to about 230 %. However, in the case of the fuel cell of Comparative Example, the current density was 90 mA/cm$^2$ in FIG. 5 and 120 mA/cm$^2$ in FIG. 6. Consequently, the current density slightly increased as about 30 %. This is because as the amount of current increased, the amount of methanol supplied also increased, indicating that methanol was more supplied in FIG. 6 than in FIG. 5. In the fuel cell of Comparative Example, the diffusion electrode did not effectively diffuse the increased methanol. Meanwhile, in the fuel cell of Example 1, the diffusion electrode effectively diffused methanol although the amount of methanol increased. The diffusion electrode of the fuel cell of Example 1 also effectively operated in a range of the cell potential of 0.2 V or lower, allowing the amount of current to be increased at least 2 times based on that of the fuel cell of Comparative Example.

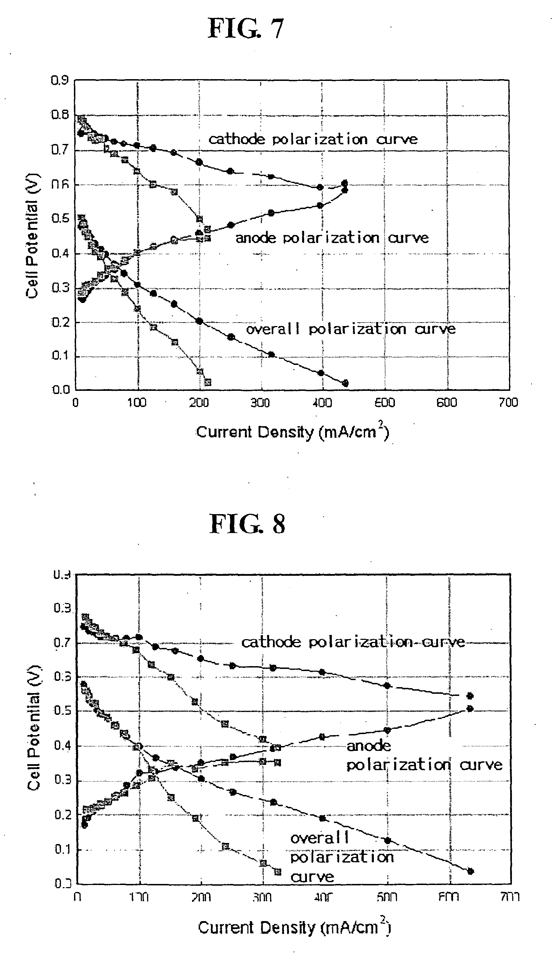

In the fuel cells obtained in Example 2 and Comparative Example, a 2M aqueous methanol solution was used as fuel supplied to the anode at a flow rate of 3 times with respect to stoichiometric amount. Air was used as an oxidant supplied to the cathode at a flow rate of 3 times with respect to stoichiometric amount. Operating temperatures were 30°C and 50°C. Polarization curves of the fuel cells were obtained and the obtained results were shown in FIGS. 7 (30°C) and 8 (50°C). In FIGS. 7 and 8, the square/solid line represents the performance of the fuel cell obtained in Comparative Example and the circle/solid line represents the performance of the fuel cell obtained in Example 2, as shown in FIGS. 5 and 6.

As apparent in FIGS. 7 and 8, the performance of the fuel cell of Example 2 more greatly increased than that of the fuel cell of Comparative Example. Also, the effect by temperature similar to Example 1 can be obtained.

In the diffusion electrode of the present invention, liquid fuel supply path and gaseous product discharge path are separately located and each path is microporous. Each path is vertically and continuously connected in the diffusion electrode between the catalyst layer and the outer substrate. Thus, if the diffusion electrode is applied to the DMFC, the following effects can be obtained.

First, the aqueous methanol solution as fuel can be continuously and uniformly supplied to the catalyst layer. Since fuel is transported via micropores, a large amount of fuel is prevented from being supplied to the catalyst layer at a time, thereby improving the efficiency of reaction of fuel and catalyst.

Second, $CO_2$ is rapidly discharged via the hydrophobic path. Since the hydrophobic path is not soaked in liquid fuel, the gas transporting path is always ensured.

Third, cross-over of methanol can be suppressed. Since most of methanol supplied via a microstructure reacts with the catalyst, the amount of cross-over of methanol considerably decreases.

Fourth, electroconductivity is improved. Electrons created by the electrochemical reaction can easily migrated to a counter electrode via an external circuit through the continuous microstructure composed of carbon powder. In a conventional diffusion electrode, carbon powder and PTFE are mixed, and thus, carbon powder is discontinuously present. As a result, electron transporting is greatly interrupted. However, in the diffusion electrode of the present invention, this problem is resolved, and thus, electroconductivity is improved.

While the present invention has been particularly shown and described with reference to exemplary embodiments thereof, it will be understood by those of ordinary skill in the art that various changes in form and details may be made therein without departing from the scope of the present invention as defined by the following claims.

**Claims**

1. A diffusion electrode for a fuel cell, comprising:

   hydrophobic porous agglomerates containing electroconductive particles and a hydrophobic binder resin, which act as a gas transporting path without soaking in a polar liquid and form a three dimensional netlike structure; and hydrophilic porous agglomerates containing electroconductive particles, which form a hree dimensional netlike structure filling space in the netlike structure formed by the hydrophobic porous agglomerates and act as a polar liquid transporting path.

2. The diffusion electrode of claim 1, wherein the hydrophobic binder resin in the hydrophobic porous agglomerate is polytetrafluoroethylene, perfluoro (alkoxyalkane), fluorinated ethylene-propylene copolymer, or a mixture thereof.

3. The diffusion electrode of claim 1 or 2, wherein a content of the hydrophobic binder resin in the hydrophobic porous agglomerate is in a range of 20 to 80 % by weight.

4. The diffusion electrode of any preceding claim, wherein the electroconductive particle in the hydrophobic porous agglomerate is spherical or needle-shaped carbon powder.

5. The diffusion electrode of claim 4, wherein an average particle diameter of the carbon powder in the hydrophobic porous agglomerate is in a range of 30 to 300 nm.

6. The diffusion electrode of any preceding claim, wherein the electroconductive particle in the hydrophilic porous agglomerate is spherical or needle-shaped carbon powder.

7. The diffusion electrode of claim 6, wherein an average particle diameter of the carbon powder in the hydrophilic porous agglomerate is in a range of 30 to 300 nm.

8. The diffusion electrode of any preceding claim, wherein a weight ratio of the hydrophobic porous agglomerate and the hydrophilic porous agglomerate is in a range of 10:90 to 90:10.

9. An electrode for a fuel cell comprising:

   a catalyst layer; and
   a diffusion electrode according to any preceding claim.

10. A fuel cell comprising
    a cathode containing a catalyst layer and a diffusion layer;
    an anode containing a catalyst layer and a diffusion layer;
    and an electrolyte membrane interposed between the cathode and the anode,
    wherein at least one of the diffusion layer of the cathode and the diffusion layer of the anode is a diffusion electrode according to any preceding claim.

11. A method of manufacturing a diffusion electrode for a fuel cell, comprising:

    mixing electroconductive particles, a hydrophobic binder resin and a solvent and drying, and heat treating the dried product to prepare a composite powder of the electroconductive particles and the hydrophobic binder resin;
    mixing the composite powder, the electroconductive particles and a solvent to prepare a diffusion electrode slurry; and
    coating the slurry on a substrate, and then, drying and heat treating the coated slurry.

# FIG. 1

PTFE/C          carbon black

# FIG. 2

aqueous
methanol
solution          carbon
                  dioxide

←--diffusion
   layer

hydrophillic          hydrophobic
path                  path          catalyst
                                    layer

# FIG. 3

```
  PTFE    solvent                              carbon
                                     PTFE/C    black    solvent

carbon                                  └────────┼────────┘
black    1st mixing                           mixing
                                                               carbon paper
   └──── 2nd mixing                            slurry

           drying                             coating

          sintering                         diffusion layer
```

# FIG. 4

# FIG. 5

# FIG. 6

# FIG. 7

# FIG. 8

**European Patent Office**

## EUROPEAN SEARCH REPORT

Application Number

EP 04 25 4513

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 93/03505 A1 (INTERNATIONAL FUEL CELLS CORPORATION) 18 February 1993 (1993-02-18) * see p.3, 1.32 - p.4, 1.11, p.5, 1.8 - p.10, 1.8, fig.3, claims * * the whole document * | 1-11 | H01M4/96 H01M4/94 H01M4/86 |
| X | WO 93/03506 A1 (INTERNATIONAL FUEL CELLS CORPORATION) 18 February 1993 (1993-02-18) * see p.3, 1.23 - p.4, 1.12, p.5, 1 .14 - p.8, 1.4, p.8, 121 - p.10, 1.17, fig.3, claims * * the whole document * | 1-11 | |
| X | EP 1 055 748 A1 (TOAGOSEI CO., LTD; MITSUI CHEMICALS, INC; KANEKA CORPORATION; FURUYA,) 29 November 2000 (2000-11-29) * see [0015] - [0023], claims * * the whole document * | 1-11 | |
| Y | EP 0 791 974 A1 (JOHNSON MATTHEY PUBLIC LIMITED COMPANY) 27 August 1997 (1997-08-27) * see col.3, 1.34 col.6, 1.33,.claims * * the whole document * | 1-11 | TECHNICAL FIELDS SEARCHED (Int.Cl.7) H01M |
| Y | WO 01/28015 A1 (CABOT CORPORATION) 19 April 2001 (2001-04-19) * see p.10, 1 .1- p.12, 1.27, claims * * the whole document * | 1-11 | |
| Y | WO 01/28013 A1 (CABOT CORPORATION; EDISON TERMOELETTRICA S.P.A) 19 April 2001 (2001-04-19) * see p.11, 1.5 - p.13, 1.13, claims * * the whole document * | 1-11 | |

-/--

The present search report has been drawn up for all claims

| Place of search | Date of completion of the search | Examiner |
|---|---|---|
| Munich | 28 January 2005 | Stellmach, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

## EUROPEAN SEARCH REPORT

Application Number

EP 04 25 4513

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 0 110 491 A2 (WESTINGHOUSE ELECTRIC CORPORATION) 13 June 1984 (1984-06-13) * see p.5, l .20-33, p.11, l.14 -25, fig.2, claims * * the whole document * | 1-11 | |
| Y,D | EP 0 928 036 A1 (DE NORA S.P.A; DE NORA ELETTRODI S.P.A) 7 July 1999 (1999-07-07) * see [0022], [0030], p.7, table 1, claims * * the whole document * | 1-11 | |
| Y,D | EP 0 100 548 A2 (ASAHI GLASS COMPANY LTD) 15 February 1984 (1984-02-15) * see p.4, l .16 - p.8, l.9, claims * * the whole document * | 1-11 | |

TECHNICAL FIELDS SEARCHED (Int.Cl.7)

The present search report has been drawn up for all claims

| Place of search | Date of completion of the search | Examiner |
|---|---|---|
| Munich | 28 January 2005 | Stellmach, J |

## ANNEX TO THE EUROPEAN SEARCH REPORT
## ON EUROPEAN PATENT APPLICATION NO.

EP 04 25 4513

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2005

| Patent document cited in search report | | Publication date | Patent family member(s) | | Publication date |
|---|---|---|---|---|---|
| WO 9303505 | A1 | 18-02-1993 | EP | 0660969 A1 | 05-07-1995 |
| WO 9303506 | A1 | 18-02-1993 | EP | 0600882 A1 | 15-06-1994 |
| EP 1055748 | A1 | 29-11-2000 | JP | 3002987 B2 | 24-01-2000 |
| | | | JP | 2000144469 A | 26-05-2000 |
| | | | JP | 2990516 B2 | 13-12-1999 |
| | | | JP | 2000219987 A | 08-08-2000 |
| | | | JP | 3074476 B2 | 07-08-2000 |
| | | | JP | 2000282280 A | 10-10-2000 |
| | | | US | 6428722 B1 | 06-08-2002 |
| | | | CN | 1134555 C | 14-01-2004 |
| | | | WO | 0029643 A1 | 25-05-2000 |
| EP 0791974 | A1 | 27-08-1997 | AU | 717536 B2 | 30-03-2000 |
| | | | AU | 1473797 A | 04-09-1997 |
| | | | BR | 9701086 A | 24-11-1998 |
| | | | CA | 2198553 A1 | 28-08-1997 |
| | | | DE | 69701103 D1 | 17-02-2000 |
| | | | DE | 69701103 T2 | 15-06-2000 |
| | | | DE | 69709784 D1 | 21-02-2002 |
| | | | DE | 69709784 T2 | 08-08-2002 |
| | | | EP | 0942482 A2 | 15-09-1999 |
| | | | ES | 2141578 T3 | 16-03-2000 |
| | | | JP | 3576739 B2 | 13-10-2004 |
| | | | JP | 9326256 A | 16-12-1997 |
| | | | US | 6010606 A | 04-01-2000 |
| | | | US | 5865968 A | 02-02-1999 |
| WO 0128015 | A1 | 19-04-2001 | US | 6399202 B1 | 04-06-2002 |
| | | | AU | 8007500 A | 23-04-2001 |
| | | | CA | 2387019 A1 | 19-04-2001 |
| | | | CN | 1379917 T | 13-11-2002 |
| | | | EP | 1226616 A1 | 31-07-2002 |
| | | | JP | 2003515872 T | 07-05-2003 |
| WO 0128013 | A1 | 19-04-2001 | US | 6280871 B1 | 28-08-2001 |
| | | | AU | 2389700 A | 23-04-2001 |
| | | | CA | 2386209 A1 | 19-04-2001 |
| | | | CN | 1373910 T | 09-10-2002 |
| | | | EP | 1228545 A1 | 07-08-2002 |
| | | | JP | 2003511829 T | 25-03-2003 |
| | | | US | 2001036570 A1 | 01-11-2001 |
| EP 0110491 | A2 | 13-06-1984 | US | 4444852 A | 24-04-1984 |
| | | | DE | 3377843 D1 | 29-09-1988 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**                EP 04 25 4513

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2005

| Patent document cited in search report | | Publication date | Patent family member(s) | | Publication date |
|---|---|---|---|---|---|
| EP 0110491 | A2 | | IN<br>ZA<br>JP<br>JP<br>JP | 161114 A1<br>8302528 A<br>1700491 C<br>3065624 B<br>59040468 A | 03-10-1987<br>25-04-1984<br>14-10-1992<br>14-10-1991<br>06-03-1984 |
| EP 0928036 | A1 | 07-07-1999 | US<br>CA<br>DE<br>DE<br>DK<br>ES<br>JP<br>US<br>US | 6103077 A<br>2256975 A1<br>69911077 D1<br>69911077 T2<br>928036 T3<br>2207033 T3<br>11273688 A<br>6368476 B1<br>6444602 B1 | 15-08-2000<br>02-07-1999<br>16-10-2003<br>08-07-2004<br>26-01-2004<br>16-05-2004<br>08-10-1999<br>09-04-2002<br>03-09-2002 |
| EP 0100548 | A2 | 15-02-1984 | JP<br>JP<br>US | 59025179 A<br>59025180 A<br>4551220 A | 09-02-1984<br>09-02-1984<br>05-11-1985 |

EPO FORM P0459

For more details about this annex : see Official Journal of the European Patent Office, No. 12/82